# EUROPEAN PATENT APPLICATION

(11) **EP 1 164 366 A2**
(43) Date of publication of application: **19.12.2001**
(21) Application number: 01113055.6
(22) Date of filing: 29.05.2001
(51) Int. Cl.: G01J 5/08

(54) **Lightpipe for infrared reception by electronic devices**

(30) Priority: 16.06.2000 US 212197 P; 15.08.2000 US 639143
(71) Applicant: Thomson Licensing S.A., 92648 Boulogne Cedex (FR)
(72) Inventor: Yoder, Mark, Alan, Carmel, IN 46033 (US); Toana, Mike William, Speedway, IN 46224 (US)
(74) Representative: Rossmanith, Manfred, Dr.

(57) **Abstract**

A lightpipe (10) is presented for use in an electronic device. The elongated lightpipe portion (12) receives infrared energy emitted from a remote device and acts as a high efficiency conduit for the received IR energy to impinge upon an infrared sensitive sensing device. The lightpipe portion (12) is hollow with an reflecting inner surface (15). The light ingress aperture (14) of the lightpipe portion (12) is covered with a material (11,11a) which is substantially transparent to infrared energy. The material (11,11a,12) and the lightpipe portion are secured together to form a unitary device.

## Description

### BACKGROUND

As used herein, the terms light, infrared energy and infrared (IR) are used interchangeably, and mean electromagnetic energy, signals or radiation at infrared wavelengths.

IR remote controls are used extensively to control consumer electronic instruments. The IR receiver (IRR) portion in each instrument is typically placed near the front panel of the device behind a window or crystal mounted on the front panel. This is often done by creating a separate printed circuit board (PCB) module that is secured to the front panel. However, it is less expensive and more convenient to assemble the IRR directly on a main PCB rather than to produce, handle and wire a separate PCB. However, because the main PCB is often further back from the front panel, this rearward placement of the main PCB can reduce the performance of the IR system especially at off-axis angles of the source remote control signal with respect to the crystal.

Lightpipes have been used extensively to transfer the IR from the front of an instrument to the IR receiver. These typically have been made from a transparent plastic, e.g., polycarbonate. Clear polycarbonate is one of the best materials to use because of its high transparency of approximately 95% for a 3 mm thickness.

However, two problems limit both the length of and effectiveness of a plastic lightpipe. Firstly, aesthetic requirements demand that the crystals, which are the front panel face of the lightpipe, appear dark to the human eye. This is accomplished by adding a dark dye to the material, e.g., for a deep purple color. The more dye that is added, or the longer the lightpipe, the less light conducted. It is a common requirement that crystals have 85% transmission but lightpipes may have only 75% transmission. Many overcome this problem by using a two-piece design: a dark crystal, with a clear plastic lightpipe positioned behind it.

The second problem is molding limitations on the diameter of the lightpipe. A larger diameter lightpipe collects and transmits more light to the receiver. Unfortunately, such a thick plastic part is difficult to mold and accordingly, is more expensive. It is common to use smaller diameter lightpipes which are lower in cost but do not perform as well.

However, even without dye added, the longer a plastic lightpipe is, the less light is transmitted due to losses in the plastic. The longest such lightpipe that assignee has successfully made is 23.75 mm long. Beyond that, the system has greatly reduced performance. However, longer than this length would permit versatility in the placement of the infrared sensitive sensor at a larger distance from the front panel.

### SUMMARY OF THE INVENTION

The present lightpipe accepts the light from a source, e.g., an infrared (IR) remote control, and channels it to a light sensitive receiver in an electronic instrument. The lightpipe is made up of two parts: a crystal portion, which acts as a window to receive the light, and a lightpipe portion, which guides the light to impinge upon an infrared sensitive sensing device. The lightpipe portion is hollow and has a highly reflective inner surface. The crystal and lightpipe portion are secured to each other to form a unitary device.

### BRIEF DESCRIPTION OF THE DRAWINGS

Fig. 1 shows a perspective view of the lightpipe according to the present invention.
Fig. 2 shows an exploded perspective view of the lightpipe of Fig. 1.
Fig. 3 shows a representation of a test set-up for the lightpipe of Figs. 1 and 2.

### DESCRIPTION OF THE PREFERRED EMBODIMENT(S)

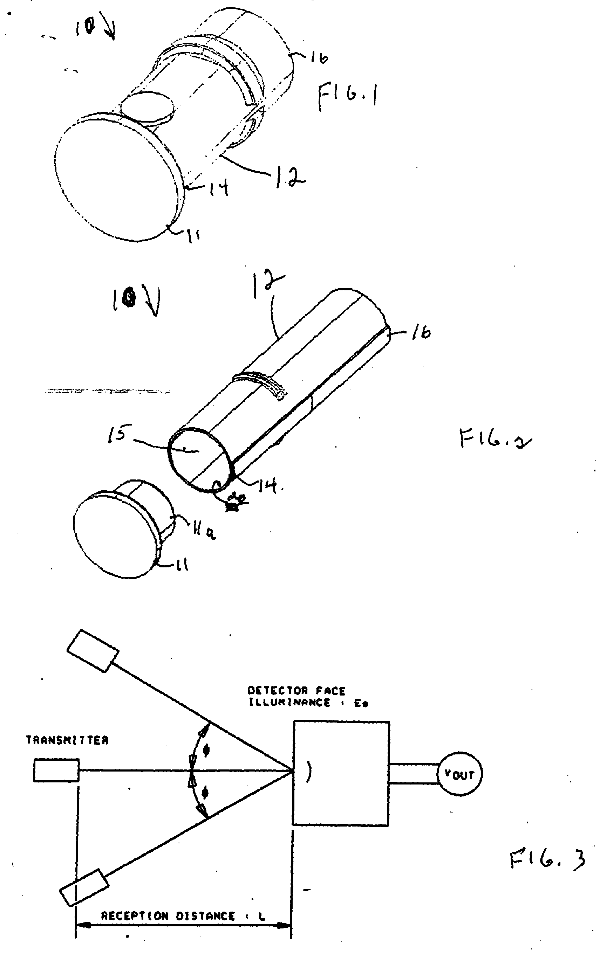

Figs. 1 and 2 show a lightpipe structure 10 formed of a hollow, elongated lightpipe 12. A light source, such as an infrared remote control (not shown), emits light into an ingress end 14 of lightpipe 12 with a thin material 11 covering the ingress end 14. The infrared energy is channeled parallel to the longitudinal axis of lightpipe 12 and exits at egress end 16. The energy leaving egress end 16 impinges upon an infrared sensitive sensing device (not shown), e.g., a photodiode, phototransistor, photocell, or the like. The infrared energy emitting remote control, and the infrared sensitive sensing device along with the control circuitry therewith, form no part of the present invention and are only discussed herein in order to more fully disclose and/or claim the present invention.

More particularly, the present invention combines the best results of a thin IR crystal 11, and the throughput of the sheet metal IR conduit 12. The lightpipe is made up of two parts: a crystal 11, which is made from a dark transparent polycarbonate material, and a conduit lightpipe portion 12, which in the exemplary embodiment is made of tin-plated sheet metal formed into a hollow round tube. The crystal 11 includes a portion 11 a which fits inside of hollow/void 15 of lightpipe portion 12. The two pieces 11, 12 are then assembled and, in the exemplary embodiment, are staked together by a fully automated process in a sheet metal progressive die.

It is within the contemplation of the present invention that other suitable securements can be used, e.g., very close fit, gluing, heat welding, etc. In this manner, the lightpipe assembly becomes a one piece unitary unit that can be almost twice as long as the prior longest usable plastic body lightpipe. It is further within the contemplation of the present invention that ingress end 14 of conduit 12 would fit within a complementary void (not shown) in crystal 11 and the two parts can similarly be secured together. It is within the contemplation of the present arrangement that a concentrating lens made of an appropriate material (not shown), can be used at the egress end 16 or somewhere in the light path between egress end 16 and the photosensitive infrared detecting device.

The crystal 11 is molded with a thin light entry wall, so that the infrared signal energy transmission will be in the range of 85% to 90%, e.g., 3 mm thick polycarbonate having a purple color. The inner reflecting surfaces 20 are subject to air with air being the propagation medium, so there is little throughput loss along the longitudinal length of the tube. Thus, the only losses that occur come from the light reflecting off of internal reflective walls 20 and this loss is minimized by using a smooth and/or polished material. Smooth bright tin-plated steel, which is a low cost commercial material and mechanically easy to work with, has been shown to provide excellent results. However, an aluminum, copper, glass, or plastic cylindrical section having an IR reflective internal surface 20 can also be used. Additionally, because the cross-sectional geometry of metal conduit/reflector 12, 20 in the exemplary embodiment is circular, the photonic energy is efficiently transmitted along the longitudinal geometric axis and the coaxial optical axis of reflecting conduit 12. However, other cross-sectional geometries, e.g., oval, elliptical, rectangular or square, can be used.

It is desirable that the receptivity of the IR receiver meet certain requirements with a minimum IR output from the remote control using the lightpipe of the present invention. Such a test setup is shown in Fig. 3, where a remote control is calibrated with fresh batteries. It is desirable that the IR receiver be operable when receiving inputs from the remote control from up to 45 degrees off-axis in any direction.

Testing has shown that the present lightpipe according to aspects of the present invention, provides at least equivalent performance on-axis and better performance at both vertical and horizontal off-axis angles than prior plastic body lightpipe designs. The construction of the lightpipe according to the present invention has permitted the construction of a lightpipe exceeding 40 mm in length with acceptable parameters. Additionally, not only does the present design improve performance, but because most of the material used is low cost tin-plated steel, it is also less expensive than other designs.

Although the above description is presented using an IR remote control as the IR source, it is within the contemplation of the present arrangement that the IR source can be other than a remote control, e.g., a keyboard or other IR transmitting device, for coupling IR of control signals and/or information signals, to the receiver.

## Claims

1. In an electronic device responsive to an infrared energy emitting device, a lightpipe comprising:
means (10) for receiving the infrared energy from the emitting device and acting as a conduit for the received energy to impinge upon an infrared sensitive sensing device,
said means (10) comprising an entry material portion (11) which is at least partially transmissive of infrared energy, and **characterized by**
a lightpipe portion (12) having an energy ingress aperture (14) and an energy egress (16) aperture, the lightpipe portion being hollow and having an infrared energy reflecting inner surface (20), the ingress aperture (14) being able to receive the incoming energy and the egress aperture (16) being able to transmit the received infrared energy to impinge upon the infrared sensitive sensing device,
the entry material portion (11,11a) being secured to the lightpipe portion and covering the ingress aperture (14).

2. The lightpipe of claim 1 **characterized in that** the lightpipe portion is made of metal with the inner surface (20) plated with a highly reflective material.

3. The lightpipe of claim 1 **characterized in that** the lightpipe portion (12) is made of plastic with the inner surface being highly reflective.

4. The lightpipe of claim 2 **characterized in that** the lightpipe portion (12) is circular in cross-section.

5. The lightpipe of claim 1 **characterized in that** the entry material portion(11,11a) is mechanically secured to the lightpipe portion.

6. The lightpipe of claim 1 **characterized in that** the entry material portion is glued to the lightpipe portion.

7. The lightpipe of claim 1 **characterized in that** the entry material portion is adhered to the lightpipe portion by the application of heat.

8. The lightpipe of claim 1 **characterized in that** the entry material portion appears darkened when viewed by the human eye.

9. The lightpipe of claim 1 **characterized in that** the entry material portion is securable to a front panel of the electronic device.

10. The lightpipe of claim 1 **characterized in that** the egress aperture includes a lens disposed within the hollow body for concentrating the infrared energy onto the infrared energy sensing device.

11. The lightpipe of claim 1 **characterized in that** the length of the lightpipe portion is along a longitudinal axis, and the energy ingress aperture and the energy egress aperture are disposed along a straight optical axis coaxial with the longitudinal axis.

12. The lightpipe of claim 1 **characterized in that** the ingress and egress apertures are circular.

13. The lightpipe of claim 1 **characterized in that** the entry material portion and the elongated lightpipe portion form a unitary structure.

14. The device of claim 1 **characterized in that** the electronic device can be any of a television receiver with or without a video display, a DVD player, an FM receiver, a CD player or an audio system.

15. The device of claim 2 **characterized in that** the lightpipe portion is made of tin-plated sheet metal.

16. A lightpipe comprising:
means (10) for receiving the infrared energy from a transmitter device and acting as a conduit for the received energy to impinge upon an infrared sensitive sensing device,
said means (10) comprising an entry material portion (11.11a) which is at least partially transmissive of infrared energy, and **characterized by**
a lightpipe portion (12) having an energy ingress aperture (14) and an energy egress aperture (16), the lightpipe portion (12) being hollow and having an infrared energy reflecting inner surface, the ingress aperture being able to receive the incoming energy and the egress aperture being able to transmit the received infrared energy to impinge upon the infrared sensitive sensing device,
the entry material portion being secured to the lightpipe portion and covering the ingress aperture.

17. A method for producing a light pipe comprising the steps of:
providing a lightpipe portion (12) and a crystal portion (11,11a), and **characterized by**
securing the lightpipe portion and the crystal portion to each other to form a unitary device.

18. The method of claim 17 **characterized in that** the lightpipe portion is hollow and the crystal portion covers a light ingress aperture of the lightpipe portion.
